# EUROPÄISCHE PATENTSCHRIFT

(11) **EP 3 612 806 B1**
(45) Veröffentlichungstag und Bekanntmachung des Hinweises auf die Patenterteilung: **01.09.2021**
(21) Anmeldenummer: 18737896.3
(22) Anmeldetag: 05.07.2018
(51) Int. Cl.: G01K 1/14, G01K 1/16

(54) **ANLEGETEMPERATURMESSFÜHLER**
CONTACT TEMPERATURE SENSOR
CAPTEUR DE TEMPÉRATURE À CONTACT

(30) Priorität: 21.07.2017 DE 102017116533
(43) Veröffentlichungstag der Anmeldung: 26.02.2020
(73) Patentinhaber: TDK Electronics AG, 81671 München (DE)
(72) Erfinder: HAND, Thomas, 12489 Berlin (DE); SCHMIDT, Michael, 14979 Groß-Beeren (DE)
(74) Vertreter: Epping - Hermann - Fischer
(86) Internationale Anmeldenummer: PCT/EP2018/068278
(87) Internationale Veröffentlichungsnummer: WO 2019/015986

(56) Entgegenhaltungen:
- EP-A1- 0 908 712

## Beschreibung

Die Erfindung betrifft einen Anlegetemperaturmessfühler mit einem Temperatursensorelement zum Erfassen einer Temperatur.

Als Anlegetemperaturmessfühler werden elektrische Temperaturfühler bezeichnet, bei denen die Wärmeübertragung zwischen Prüfobjekt und Messfühler nur über eine bestimmte Anlegefläche erfolgt. Anlegetemperaturmessfühler werden häufig genutzt zur indirekten Temperaturmessung von Flüssigkeiten in Rohren. Werden die Anlegetemperaturmessfühler an schlecht wärmeleitende Rohre angelegt, erhöht sich eine Ansprechzeit der Sensorelemente der Anlegetemperaturmessfühler und vorgegebene Ansprechzeitanforderungen für bestimmte Anwendungen, zum Beispiel im Kfz-Bereich, können nicht eingehalten werden.

EP 0 908 712 A1 offenbart einen Temperaturfühler, der ein Sensorelement aufweist, das aus einem Träger besteht, auf dessen einer Fläche ein als Dünnschichtelement ausgebildetes Fühlerelement mittels eines thermischen oder elektrophysikalischen Abscheideverfahrens aufgebracht ist. Auf der dem Fühlerelement gegenüberliegenden Fläche ist eine Schicht aus einer gut löt- bzw. schweißbaren Metalllegierung mittels eines ebensolchen Abscheideverfahrens aufgebracht, die mittels eines thermischen Fügeverfahrens mit einem Koppelblech fest verbunden ist.

Die Aufgabe, die der Erfindung zugrunde liegt, ist es, einen Anlegetemperaturmessfühler zu schaffen, der einen ausreichend guten Wärmetransport von einem Prüfkörper zu einem Sensorelement des Anlegetemperaturmessfühlers ermöglicht.

Die Aufgabe wird gelöst durch die Merkmale des unabhängigen Patentanspruchs. Vorteilhafte Weiterbildungen der Erfindung sind in den abhängigen Ansprüchen gekennzeichnet.

Die Erfindung zeichnet sich aus durch einen Anlegetemperaturmessfühler mit einem Anlegekörper. Der Anlegekörper weist eine Bodenwandung zum Anlegen des Anlegetemperaturmessfühlers an einen Prüfkörper auf. Der Anlegetemperaturmessfühler umfasst eine Trägerkeramik zur direkten thermischen Kopplung des Anlegetemperaturmessfühlers mit dem Prüfkörper. Die Trägerkeramik ist auf einer dem Prüfkörper zugewandten Seite der Bodenwandung angeordnet. Ferner weist der Anlegetemperaturmessfühler ein Temperatursensorelement auf, das thermisch mit der Trägerkeramik gekoppelt ist.

Die Trägerkeramik ist derart angeordnet, dass sie in einem montierten Zustand des Anlegekörpers an dem Prüfkörper direkt thermisch und mechanisch gekoppelt ist mit dem Prüfkörper. Direkt thermisch gekoppelt bedeutet hierbei ohne Zwischenschaltung von weiteren Komponenten und dass sich die Trägerkeramik und der Prüfkörper berühren.

Die direkte Anordnung der Trägerkeramik am Prüferkörper im montierten Zustand ermöglicht vorteilhafterweise eine Reduzierung von Wärmeübergangsstellen. Durch den verbesserten Wärmeübergang von der Oberfläche des Prüfkörpers zum Temperatursensorelement können schneller Ansprechzeiten des Anlegetemperaturmessfühlers realisiert werden.

In einer vorteilhaften Ausgestaltung weist die Trägerkeramik auf einer dem Prüfkörper zugewandten Seite und/oder auf einer dem Prüfkörper abgewandten Seite eine Metallisierung auf. Die Metallisierung ermöglicht eine gute und schnelle Wärmeleitung und damit eine wenig verlustbehaftete Wärmeenergieübertragung von dem Prüfkörper zu der Trägerkeramik und dem Temperatursensorelement. Die Metallisierung, die auf der dem Prüfkörper zugewandten Seite der Trägerkeramik angeordnet ist und/oder die Metallisierung, die auf der dem Prüfkörper abgewandten Seite der Trägerkeramik angeordnet ist, kann insbesondere Kupfer oder Silber umfassen.

In einer weiteren vorteilhaften Ausgestaltung weist die dem Prüfkörper zugewandten Seite der Trägerkeramik eine vollflächige Metallisierung auf. Vorteilhafterweise kann so die Wärmeübertragung weiter verbessert werden.

Ferner weist die Trägerkeramik auf der dem Prüfkörper abgewandten Seite eine strukturierte Metallisierung auf. Dies ermöglicht in einfacher Weise eine geeignete elektrische Kontaktierung des Temperatursensorelements.

In einer weiteren vorteilhaften Ausgestaltung weist die Trägerkeramik Siliziumnitrid auf oder besteht aus Siliziumnitrid. Siliziumnitrid weist im Vergleich zu anderen Keramikmaterialien eine höhere Bruchfestigkeit auf. Aufgrund der direkten Montage der Trägerkeramik an dem Prüfkörper kann die Trägerkeramik größeren mechanischen und thermischen Beanspruchungen unterliegen. Der Nutzung von Siliziumnitrid als Keramikträgermaterial hat somit den Vorteil, dass eine Zuverlässigkeit des Anlegetemperaturmessfühlers erhöht werden kann. Alternativ oder zusätzlich können auch andere Keramikmaterialien genutzt werden, insbesondere zum Beispiel Aluminiumoxid.

In einer weiteren vorteilhaften Ausgestaltung umfasst das Temperatursensorelement einen Heißleiter. Der Heißleiter kann auch als NTC-Widerstand (Negative-Temperature-Coefficient-Widerstand) bezeichnet werden. Der Heißleiter weist einen Widerstand mit einem negativen Temperaturkoeffizienten auf. Der Heißleiter ermöglicht vorteilhafterweise, dass eine Temperatur oder eine Temperaturänderung an der Oberfläche des Prüfkörpers sehr einfach und kostengünstig erfasst werden kann.

In einer weiteren vorteilhaften Ausgestaltung ist das Temperatursensorelement über eine stoffschlüssige Fügeverbindung mit der Trägerkeramik gekoppelt. Die stoffschlüssige Fügeverbindung kann eine Lötverbindung umfassen. Alternativ kann die stoffschlüssige Fügeverbindung mittels einer gemeinsamen Sinterung der Trägerkeramik mit dem Temperatursensorelement hergestellt werden.

In einer weiteren vorteilhaften Ausgestaltung umfasst der Anlegetemperaturmessfühler zumindest einen Kontakt zur elektrischen Kopplung mit einer Auswerteeinrichtung und das Temperatursensorelement und/oder die Trägerkeramik sind jeweils über einen elektrisch leitenden Anschlussdraht mit dem zumindest einen elektrischen Kontakt gekoppelt und/oder direkt verbunden. Der Anschlussdraht kann eine Plattierung aufweisen. Der Kontakt umfasst beispielsweise einen Kontaktstift.

In einer weiteren vorteilhaften Ausgestaltung umfasst der jeweilige elektrisch leitende Anschlussdraht einen Leiter, der eine Eisen-Nickel-Legierung aufweist. Auf den Leiter ist eine Kupferplattierung aufgebracht. Insbesondere kann der Anschlussdraht als Dumet-Draht ausgebildet sein. Vorteilhafterweise weist solch ein Anschlussdraht eine geringere Wärmeleitfähigkeit im Vergleich zu Standarddrähten aus Kupfer oder Aluminium auf. Dadurch kann eine Wärmeableitung vom Temperatursensorelement, insbesondere von dem Heißleiterchip, verringert werden.

In einer weiteren vorteilhaften Ausgestaltung ist die Metallisierung auf der dem Prüfkörper abgewandten Seite der Trägerkeramik und/oder das Temperatursensorelement über eine elektrisch leitfähige Verbindung mit dem jeweiligen elektrisch leitenden Anschlussdraht verbunden. Die Verbindung kann mittels Schweißen, Löten, Bonden oder Kleben hergestellt werden.

In einer weiteren vorteilhaften Ausgestaltung weisen die Trägerkeramik und das Temperatursensorelement einen gemeinsamen Verguss auf. Der Verguss ist vorzugsweise derart ausgebildet, dass der Heißleiter resistent gegenüber Feuchtigkeit und/oder anderen Umwelteinflüssen ist und somit das Temperatursensorelement eine erhöhte Zuverlässigkeit aufweist. Insbesondere verhindert der Verguss ein Eindringen von Feuchtigkeit in den Heißleiter.

Ausführungsbeispiele der Erfindung sind im Folgenden anhand der schematischen Zeichnungen erläutert.

Es zeigen:
Figur 1 eine Schnittansicht eines Ausführungsbeispiels eines Anlegetemperaturmessfühlers,
Figur 2 eine erste Schnittansicht eines Ausführungsbeispiels eines Anlegekörpers des Anlegetemperaturmessfühlers und
Figur 3 eine zweite Schnittansicht des Ausführungsbeispiels des Anlegekörpers.

Elemente gleicher Konstruktion oder Funktion sind figurenübergreifend mit den gleichen Bezugszeichen versehen.

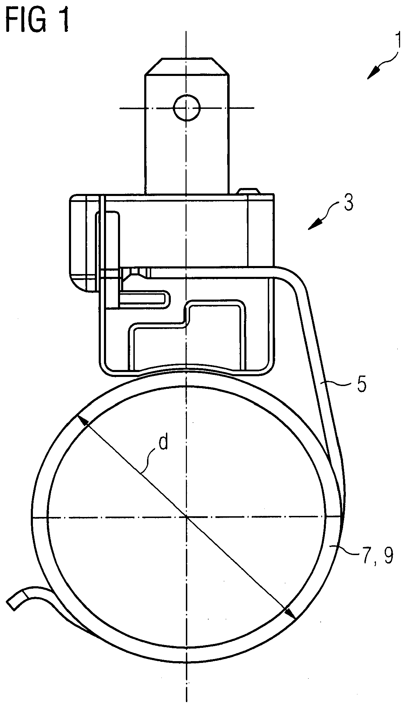

Figur 1 zeigt eine Schnittansicht eines Ausführungsbeispiels eines Anlegetemperaturmessfühlers 1. Der Anlegetemperaturmessfühler 1 weist einen Anlegekörper 3 und beispielsweise eine Spannklemme 5 auf. Ein Ende der Spannklemme 5 ist beispielsweise mit dem Anlegekörper 3 mechanisch gekoppelt. Die Spannklemme 5 ist angeordnet und ausgebildet, den Anlegekörper 3 an einen Prüfkörper 7 anzudrücken und den Anlegekörper 3 an dem Prüfkörper 7 zu fixieren. Alternativ kann der Anlegetemperaturmessfühler 1 ein Spannband aufweisen, das mit seinen beiden Enden jeweils an dem Anlegekörper 3 befestigt ist. Vorzugsweise ist eine Länge des Spannbandes einstellbar.

In dem gezeigten Ausführungsbeispiel ist der Anlegetemperaturmessfühler 1 an einem Prüfkörper 7 in Form eines Rohres 9 montiert. Im Inneren des Rohres 9 kann ein hier nicht dargestelltes Fluid, beispielsweise ein Kühlmittel, fließend oder auch ruhend vorhanden sein. Das Fluid kann ein Gas und/oder eine Flüssigkeit umfassen. Der Anlegetemperaturmessfühler 1 umfasst ein Temperatursensorelement 30, das in thermischem Kontakt mit dem Rohr 9 steht. Der Anlegekörper 3 weist ein Steckergehäuse 13 auf. Im Innern des Steckergehäuses 13 ist ein Kontaktstift 15 zur elektrischen Kopplung mit einer Auswerteeinrichtung angeordnet, der über leitende Verbindungen mit dem Temperatursensorelement 30 verbunden ist.

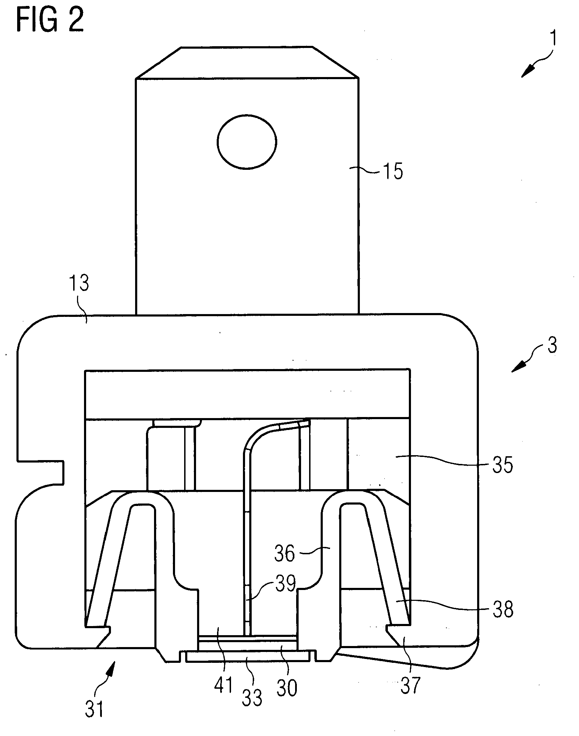

Figur 2 zeigt eine erste Schnittansicht eines Ausführungsbeispiels des Anlegekörpers 3 im Detail. Der Anlegekörper 3 weist eine Bodenwandung 31 auf zum Anlegen des Anlegetemperaturmessfühlers 1 an den Prüfkörper 7.

Der Anlegekörper 3 umfasst eine Trägerkeramik 33 zur direkten thermischen Kopplung des Prüfkörpers 7 mit dem Anlegetemperaturmessfühler 1. Die Trägerkeramik 33 ist auf einer dem Prüfkörper 7 zugewandten Seite der Bodenwandung 31 angeordnet.

Der Anlegekörper 3 weist beispielsweise einen Hohlraum 35 mit einer Öffnung auf. Die Öffnung ist in der Bodenwandung 31 des Anlegekörpers 3 angeordnet und wird zumindest zum Teil von der Trägerkeramik 33 abgedeckt oder verschlossen.

In dem Hohlraum 35 ist zum Beispiel zumindest teilweise ein Halteelement 36 angeordnet. Das Halteelement 36 ist angeordnet und ausgebildet das Temperatursensorelement 30 und die Trägerkeramik 33 zu halten.

Das Halteelement 36 ist beispielsweise als Halteklammer ausgebildet. Das Halteelement 36 wird beispielsweis mittels einer Klemmverbindung in dem Hohlraum 35 des Anlegekörpers 3 gehalten. Beispielsweise weist eine Innenwandung des Hohlraumes 35 Rasthaken 37 auf, auf denen sich Klammerschenkel 38 der Halteklammern abzustützen.

Die Trägerkeramik 33 ist beispielsweise mechanisch mit dem Halteelement 36 gekoppelt.

Die Trägerkeramik 33 weist vorzugsweise Siliziumnitrid auf oder besteht aus Siliziumnitrid. Siliziumnitrid weist eine hohe Bruchfestigkeit auf. Alternativ ist möglich, dass die Trägerkeramik 33 ein alternatives oder weiteres Keramikmaterial umfasst, beispielsweise Aluminiumoxid. Das heißt, das Keramikmaterial kann abhängig von den Anforderungen hinsichtlich der Bruchfestigkeit, einer Wärmeleitfähigkeit und/oder einer Verarbeitbarkeit gewählt werden.

Die Trägerkeramik 33 weist vorzugsweise auf der dem Prüfkörper 7 zugewandten Seite eine vollflächige Metallisierung auf zur effizienten Aufnahme der Wärmenergie des Prüfkörpers 7.

Auf einer dem Prüfkörper 7 abgewandten Seite der Trägerkeramik 33 ist ein Temperatursensorelement 30 angeordnet, das thermisch mit der Trägerkeramik 33 gekoppelt ist.

Das Temperatursensorelement 30 ist vorzugsweise thermisch und mechanisch direkt mit der Trägerkeramik 33 gekoppelt. Die Trägerkeramik 33 weist auf der dem Prüfkörper 7 abgewandten Seite eine Metallisierung auf, vorzugsweise eine strukturierte Metallisierung. Die Metallisierung kann beispielsweise Silber oder Kupfer umfassen oder aus Silber oder Kupfer bestehen.

Das Temperatursensorelement 30 ist über eine stoffschlüssige Fügeverbindung mit der Trägerkeramik 33 gekoppelt. Die stoffschlüssige Fügeverbindung kann eine Lötverbindung umfassen. Alternativ kann die stoffschlüssige Fügeverbindung mittels einer gemeinsamen Sinterung der Trägerkeramik 33 mit dem Temperatursensorelement 30 hergestellt werden. Das Temperatursensorelement 30 weist in diesem Fall vorzugsweise ebenfalls einen keramischen Werkstoff auf. Die Sinterung kann drucklos oder mit Druck erfolgen.

Das Temperatursensorelement 30 umfasst vorzugsweise einen Heißleiter, auch NTC-Widerstand (NTC - Negative Temperature Coefficient) genannt.

Der Anlegetemperaturmessfühler 1 umfasst zumindest einen Kontakt zur elektrischen Kopplung mit einer Auswerteeinrichtung. Das Temperatursensorelement 30 und/oder die Trägerkeramik 33 sind jeweils über einen elektrisch leitenden Anschlussdraht 39 mit dem zumindest einen elektrischen Kontakt gekoppelt und/oder direkt verbunden.

Der Anschlussdraht 39 weist vorzugsweise eine Plattierung auf. Der jeweilige elektrisch leitende Anschlussdraht 39 weist einen Leiter auf, der beispielsweis eine Eisen-Nickel-Legierung umfasst. Auf den Leiter ist beispielsweise eine Kupferplattierung aufgebracht.

Vorzugsweise ist die Metallisierung auf der dem Prüfkörper 7 abgewandten Seite der Trägerkeramik 33 und/oder das Temperatursensorelement 30 über eine stoffschlüssige Verbindung mit dem jeweiligen elektrisch leitenden Anschlussdraht 39 verbunden.

Die Trägerkeramik 33 und das Temperatursensorelement 30 weisen vorzugsweise einen gemeinsamen Verguss 41 auf. Der Verguss 41 wird im Wesentlichen auf der von dem Prüfkörper 7 abgewandten Seite auf die Trägerkeramik 33 aufgebracht derart, dass die das Temperatursensorelement 30 und die Trägerkeramik 33 auf der dem Prüfköper 7 abgewandten Seite, wo sie nicht durch einen Kunststoff des Halteelements 36 und/oder des Anlegekörpers 3 abgedeckt werden, mit dem Verguss 41 bedeckt sind.

Der Verguss 41 ist vorzugsweise derart ausgebildet und angeordnet, dass keine Feuchtigkeit in das Temperatursensorelement 30 eindringen kann und die Trägerkeramik 33 auf der dem Prüfköper abgewandten Seite der Trägerkeramik 33 überwiegend vollflächig oder vollflächig abgestützt ist. So kann ein Durchbiegen oder Brechen der Trägerkeramik 33 und/oder des Temperatursensorelements 30 weitestgehend verhindert werden und eine Zuverlässigkeit des Anlegetemperaturmessfühlers 1 erhöht wird.

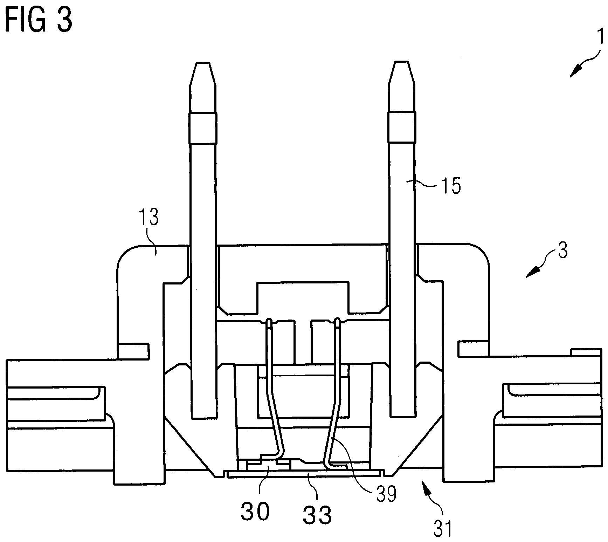

Die direkte thermische und mechanische Kopplung der Trägerkeramik 33 mit dem Prüfkörper 7 hat den Vorteil, dass eine Ansprechzeit wesentlich verringert werden kann. Es können Wärmeübergangsstellen reduziert werden und abhängig von jeweiligen Abmessungen, insbesondere in Bezug auf eine Dicke der Trägerkeramik 33, können geforderte oder gewünschte Ansprechzeiten des Anlegetemperaturmessfühlers 1 realisiert werden. Figur 3 zeigt eine zweite Schnittansicht des Ausführungsbeispiels des Anlegekörpers 3.

### Bezugszeichenliste

- 1: Anlegetemperaturmessfühler
- 3: Anlegekörper
- 5: Spannklemme
- 7: Prüfkörper
- 9: Rohr
- 13: Steckergehäuse
- 15: Kontaktstift
- 30: Temperatursensorelement
- 31: Bodenwandung
- 33: Trägerkeramik
- 35: Hohlraum
- 36: Halteelement
- 37: Rasthaken
- 38: Klammerschenkel
- 39: Anschlussdraht
- 41: Verguss

## Patentansprüche

1. Anlegetemperaturmessfühler (1) mit einem Anlegekörper (3), wobei der Anlegekörper (3) aufweist
- eine Bodenwandung (31) zum Anlegen des Anlegetemperaturmessfühlers (1) an einen Prüfkörper (7),
- eine Trägerkeramik (33) zur thermischen Kopplung des Prüfkörpers (7) mit dem Anlegetemperaturmessfühler, die auf einer dem Prüfkörper (7) zugewandten Seite der Bodenwandung (31) angeordnet ist, wobei die Trägerkeramik (33) auf einer dem Prüfkörper (7) zugewandten Seite eine Metallisierung aufweist,
- ein Temperatursensorelement (30), das thermisch mit der Trägerkeramik (33) gekoppelt ist,
**dadurch gekennzeichnet, dass**
die thermische Kopplung des Prüfkörpers mit dem Anlegetemperaturmessfühler eine direkte thermische Kopplung ist.

2. Anlegetemperaturmessfühler (1) nach Anspruch 1,
bei dem die Trägerkeramik (33) auf einer dem Prüfkörper (7) abgewandten Seite eine Metallisierung aufweist.

3. Anlegetemperaturmessfühler (1) nach Anspruch 1 oder 2, bei dem die Trägerkeramik (33) auf der dem Prüfkörper (7) zugewandten Seite eine vollflächige Metallisierung aufweist.

4. Anlegetemperaturmessfühler (1) nach Anspruch 2 oder 3, bei dem die Trägerkeramik (33) auf der dem Prüfkörper (7) abgewandten Seite eine strukturierte Metallisierung aufweist.

5. Anlegetemperaturmessfühler (1) nach einem der vorstehenden Ansprüche,
bei dem die Trägerkeramik (33) Siliziumnitrid aufweist oder aus Siliziumnitrid besteht.

6. Anlegetemperaturmessfühler (1) nach einem der vorstehenden Ansprüche,
bei dem das Temperatursensorelement (30) einen Heißleiter umfasst.

7. Anlegetemperaturmessfühler (1) nach einem der vorstehenden Ansprüche,
bei dem das Temperatursensorelement (30) über eine stoffschlüssige Fügeverbindung mit der Trägerkeramik (33) gekoppelt ist.

8. Anlegetemperaturmessfühler (1) nach einem der vorstehenden Ansprüche,
bei dem der Anlegetemperaturmessfühler (1) zumindest einen Kontakt aufweist zur elektrischen Kopplung mit einer Auswerteeinrichtung und das Temperatursensorelement (30) und/oder die Trägerkeramik (33) jeweils über einen elektrisch leitenden Anschlussdraht (39), der eine Plattierung aufweist, mit dem zumindest einen elektrischen Kontakt gekoppelt und/oder direkt verbunden ist.

9. Anlegetemperaturmessfühler (1) nach Anspruch 8,
bei dem der jeweilige elektrisch leitende Anschlussdraht (39) einen Leiter aufweist, der eine Eisen-Nickel-Legierung aufweist, und auf den Leiter eine Kupferplattierung aufgebracht ist.

10. Anlegetemperaturmessfühler (1) nach einem der vorstehenden Ansprüche,
bei dem die Metallisierung auf der dem Prüfkörper (7) abgewandten Seite der Trägerkeramik (33) und/oder das Temperatursensorelement (30) über eine stoffschlüssige Verbindung mit dem jeweiligen elektrisch leitenden Anschlussdraht (39) verbunden ist.

11. Anlegetemperaturmessfühler (1) nach einem der vorstehenden Ansprüche
bei dem die Trägerkeramik (33) und das Temperatursensorelement (30) einen gemeinsamen Verguss aufweisen.

## Claims

1. A contact temperature sensor (1) having a contact body (3), wherein the contact body (3) has
- a bottom wall (31) for applying the contact temperature sensor (1) to a test body (7),
- a carrier ceramics (33) for thermally coupling the test body (7) to the contact temperature sensor, wherein the carrier ceramics is arranged on a side of the bottom wall (31) facing the test body (7), wherein the carrier ceramics (33) has a metallization on a side facing the test body (7),
- a temperature sensor element (30) which is thermally coupled to the carrier ceramics (33),
**characterized in that**
the thermal coupling of the test body to the contact temperature sensor is a direct thermal coupling.

2. The contact temperature sensor (1) according to Claim 1, wherein the carrier ceramics (33) has a metallization on a side facing away from the test body (7).

3. The contact temperature sensor (1) according to Claim 1 or 2, wherein the carrier ceramics (33) has a metallization over the entire surface on the side facing the test body (7).

4. The contact temperature sensor (1) according to Claim 2 or 3, wherein the carrier ceramics (33) has a structured metallization on the side facing away from the test body (7).

5. The contact temperature sensor (1) according to any one of the preceding claims,
wherein the carrier ceramics (33) contains silicon nitride or consists of silicon nitride.

6. The contact temperature sensor (1) according to any one of the preceding claims,
wherein the temperature sensor element (30) comprises an NTC thermistor.

7. The contact temperature sensor (1) according to any one of the preceding claims,
wherein the temperature sensor element (30) is coupled to the carrier ceramics (33) via a material-bonding joint connection.

8. The contact temperature sensor (1) according to any one of the preceding claims,
wherein the contact temperature sensor (1) has at least one contact for electrical coupling to an evaluation device and the temperature sensor element (30) and/or the carrier ceramics (33) are each coupled and/or directly connected to the at least one electrical contact via an electrically conductive connection wire (39) which has a plating.

9. The contact temperature sensor (1) according to Claim 8, wherein the respective electrically conductive connection wire (39) has a conductor which has an iron-nickel alloy, and a copper plating is affixed to the conductor.

10. The contact temperature sensor (1) according to any one of the preceding claims,
wherein the metallization on the side of the carrier ceramics (33) facing away from the test body (7) and/or the temperature sensor element (30) is connected to the respective electrically conductive connection wire (39) via a material-bonding joint connection.

11. The contact temperature sensor (1) according to any one of the preceding claims
wherein the carrier ceramics (33) and the temperature sensor element (30) have a common potting.

## Revendications

1. Sonde de température de contact (1) présentant un corps de contact (3), le corps de contact (3) présentant
- une paroi de fond (31) destinée à mettre en contact la sonde de température de contact (1) contre une éprouvette (7) ,
- une céramique support (33) pour le couplage thermique de l'éprouvette (7) avec une sonde de température de contact, laquelle céramique est disposée sur une face de la paroi de fond (31) orientée vers l'éprouvette (7), la céramique support (33) présentant une métallisation sur une face orientée vers l'éprouvette (7),
- un élément capteur de température (30), qui est couplé thermiquement avec la céramique support (33),
**caractérisée en ce que**
le couplage thermique de l'éprouvette avec la sonde de température de contact est un couplage thermique direct.

2. Sonde de température de contact (1) selon la revendication 1, dans laquelle la céramique support (33) présente une métallisation sur une face orientée à l'opposé de l'éprouvette (7).

3. Sonde de température de contact (1) selon la revendication 1 ou 2, dans laquelle la céramique support (33) présente une métallisation sur toute la surface sur la face orientée vers l'éprouvette (7).

4. Sonde de température de contact (1) selon la revendication 2 ou 3, dans laquelle la céramique support (33) présente une métallisation structurée sur la face orientée à l'opposé de l'éprouvette (7).

5. Sonde de température de contact (1) selon l'une quelconque des revendications précédentes,
dans laquelle la céramique support (33) présente du nitrure de silicium ou est constituée par du nitrure de silicium.

6. Sonde de température de contact (1) selon l'une quelconque des revendications précédentes,
dans laquelle l'élément capteur de température (30) comprend un conducteur de chaleur.

7. Sonde de température de contact (1) selon l'une quelconque des revendications précédentes,
dans laquelle l'élément capteur de température (30) est couplé avec la céramique support (33) par l'intermédiaire d'un assemblage par liaison de matière.

8. Sonde de température de contact (1) selon l'une quelconque des revendications précédentes,
dans laquelle la sonde de température de contact (1) présente au moins un contact pour le couplage électrique avec un instrument d'évaluation et l'élément capteur de température (30) et/ou la céramique support (33) est/sont couplé(e)(s) et/ou connecté(e)(s) directement avec ledit au moins un contact électrique à chaque fois par l'intermédiaire d'un fil de connexion électroconducteur (39) qui présente un plaquage.

9. Sonde de température de contact (1) selon la revendication 8,
dans laquelle le fil de connexion électroconducteur (39) respectif présente un conducteur qui présente un alliage de fer-nickel et un plaquage de cuivre est appliqué sur le conducteur.

10. Sonde de température de contact (1) selon l'une quelconque des revendications précédentes,
dans laquelle la métallisation sur la face de la céramique support (33) orientée à l'opposé de l'éprouvette (7) et/ou l'élément capteur de température (30) est/sont relié(e)(s) au fil de connexion électroconducteur (39) respectif par l'intermédiaire d'un assemblage par liaison de matière.

11. Sonde de température de contact (1) selon l'une quelconque des revendications précédentes,
dans laquelle la céramique support (33) et l'élément capteur de température (30) présentent un scellement commun.
